(19) Europäisches Patentamt
European Patent Office
Office européen des brevets

(11) **EP 3 714 536 B1**

(12) **EUROPÄISCHE PATENTSCHRIFT**

(45) Veröffentlichungstag und Bekanntmachung des Hinweises auf die Patenterteilung:
**05.01.2022   Patentblatt 2022/01**

(21) Anmeldenummer: **18807063.5**

(22) Anmeldetag: **20.11.2018**

(51) Int Cl.:
*H02K 19/24* (2006.01)       *H02K 29/03* (2006.01)
*H02K 3/28* (2006.01)        *H02K 15/02* (2006.01)
*H02K 19/10* (2006.01)

(86) Internationale Anmeldenummer:
**PCT/EP2018/081842**

(87) Internationale Veröffentlichungsnummer:
**WO 2019/101705 (31.05.2019 Gazette 2019/22)**

(54) **VERFAHREN ZUR AUSLEGUNG EINES STATORSEGMENTS FÜR EINEN STATOR EINER SYNCHRON-RELUKTANZMASCHINE SOWIE ENTSPRECHENDER STATOR UND ENTSPRECHENDE RELUKTANZMASCHINE**

METHOD FOR DESIGNING A STATOR SEGMENT FOR A STATOR OF A SYNCHRONOUS RELUCTANCE MACHINE AND CORRESPONDING STATOR AND CORRESPONDING RELUCTANCE MACHINE

PROCÉDÉ DE DIMENSIONNEMENT D'UN SEGMENT DE STATOR POUR UN STATOR D'UNE MACHINE SYNCHRONE À RELUCTANCE AINSI QUE STATOR CORRESPONDANT ET MACHINE À RELUCTANCE CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2017   DE 102017127502**

(43) Veröffentlichungstag der Anmeldung:
**30.09.2020   Patentblatt 2020/40**

(73) Patentinhaber: **Rheinisch-Westfälische Technische Universität Hochschule (RWTH) Aachen 52062 Aachen (DE)**

(72) Erfinder:
- **LANGE, Tobias 52064 Aachen (DE)**
- **WEISS, Claude Pascal 52064 Aachen (DE)**
- **REIMERS, Jan-Dirk 52074 Aachen (DE)**
- **BERTHOLD, Tobias 52355 Düren (DE)**

(74) Vertreter: **Michalski Hüttermann & Partner Patentanwälte mbB Speditionstraße 21 40221 Düsseldorf (DE)**

(56) Entgegenhaltungen:
**SU-A1- 1 690 103      US-A- 5 117 144**

- **CHRISTOPHER M. SPARGO ET AL: "Application of Fractional-Slot Concentrated Windings to Synchronous Reluctance Motors", IEEE TRANSACTIONS ON INDUSTRY APPLICATIONS., Bd. 51, Nr. 2, 1. März 2015 (2015-03-01), Seiten 1446-1455, XP055544488, US ISSN: 0093-9994, DOI: 10.1109/TIA.2014.2341733**
- **GRUBER WOLFGANG ET AL: "Design of a novel bearingless permanent magnet vernier slice motor with external rotor", 2017 IEEE INTERNATIONAL ELECTRIC MACHINES AND DRIVES CONFERENCE (IEMDC), IEEE, 21. Mai 2017 (2017-05-21), Seiten 1-6, XP033137048, DOI: 10.1109/IEMDC.2017.8001861 [gefunden am 2017-08-03]**

- **GUEMES J A ET AL:** "Comparative study of PMSM with integer-slot and fractional-slot windings", ELECTRICAL MACHINES (ICEM), 2010 XIX INTERNATIONAL CONFERENCE ON, IEEE, PISCATAWAY, NJ, USA, 6. September 2010 (2010-09-06), Seiten 1-6, XP031779699, ISBN: 978-1-4244-4174-7
- **DAJAKU GURAKUQ ET AL:** "Comparison of Two Different IPM Traction Machines With Concentrated Winding", IEEE TRANSACTIONS ON INDUSTRIAL ELECTRONICS, IEEE SERVICE CENTER, PISCATAWAY, NJ, USA, Bd. 63, Nr. 7, 1. Juli 2016 (2016-07-01), Seiten 4137-4149, XP011613577, ISSN: 0278-0046, DOI: 10.1109/TIE.2016.2544720 [gefunden am 2016-06-09]
- **DAJAKU GURAKUQ ET AL:** "Comparison of two FSCW PM machines for integrated traction motor/generator", 2015 IEEE INTERNATIONAL ELECTRIC MACHINES & DRIVES CONFERENCE (IEMDC), IEEE, 10. Mai 2015 (2015-05-10), Seiten 187-194, XP032865820, DOI: 10.1109/IEMDC.2015.7409058 [gefunden am 2016-02-16]
- **Gurakuq Dajaku ET AL:** "New Self-Excited Synchronous Machine with Tooth Concentrated Winding", , 31. Dezember 2013 (2013-12-31), XP055265212, Gefunden im Internet: URL:https://dokumente.unibw.de/pub/bscw.cgi/d7992042/2013%20EDPC%20%20%28Dajaku%20-%20Gerling%29.pdf [gefunden am 2016-04-13]
- **MATTEO GAMBA ET AL:** "A new PM-assisted Synchronous Reluctance machine with a nonconventional fractional slot per pole combination", 2014 INTERNATIONAL CONFERENCE ON OPTIMIZATION OF ELECTRICAL AND ELECTRONIC EQUIPMENT (OPTIM), 1. Mai 2014 (2014-05-01), Seiten 268-275, XP055544479, DOI: 10.1109/OPTIM.2014.6850937 ISBN: 978-1-4799-5183-3
- **MIHAIL V. CISTELECAN ET AL:** "Three phase tooth-concentrated interspersed windings with low space harmonic content", ELECTRICAL MACHINES (ICEM), 2010 XIX INTERNATIONAL CONFERENCE ON, 1. September 2010 (2010-09-01), Seiten 1-6, XP055544077, Piscataway, NJ, USA DOI: 10.1109/ICELMACH.2010.5608144 ISBN: 978-1-4244-4174-7
- **XIAO CHEN ET AL:** "Permanent Magnet Assisted Synchronous Reluctance Machine with fractional-slot winding configurations", 2013 INTERNATIONAL ELECTRIC MACHINES & DRIVES CONFERENCE, 1. Mai 2013 (2013-05-01), Seiten 374-381, XP055544419, DOI: 10.1109/IEMDC.2013.6556278 ISBN: 978-1-4673-4975-8
- **BASTIAN LEHNER ET AL:** "Design considerations for concentrated winding synchronous reluctance machines", 2016 IEEE TRANSPORTATION ELECTRIFICATION CONFERENCE AND EXPO, ASIA-PACIFIC (ITEC ASIA-PACIFIC), 1. Juni 2016 (2016-06-01), Seiten 485-490, XP055543346, DOI: 10.1109/ITEC-AP.2016.7513003 ISBN: 978-1-5090-1272-5 in der Anmeldung erwähnt

**Beschreibung**

Die Erfindung betrifft ein Verfahren zur Auslegung eines Statorsegments für einen Stator einer m-phasigen Synchron-Reluktanzmaschine mit konzentrierten Wicklungen, wobei der Stator (a) in ein einziges Statorsegment oder in mehrere Statorsegmente aufteilbar ist und (b) einen ferromagnetischen Grundkörper mit umfänglich verteilten Zahnstrukturen und ein im Grundkörper einliegendes Wicklungssystem umfasst, welches pro Statorsegment z Zahnstrukturen sowie eine der Phasenanzahl m entsprechende Anzahl von Wicklungssträngen aufweist, von denen jeder seinerseits eine Serien- und/oder Parallelschaltung mehrerer der konzentrierten Wicklungen umfasst, wobei ein Rotor der Synchron-Reluktanzmaschine in einem dem Statorsegment entsprechenden Umfangsabschnitt eine Polzahl p aufweist.

Die Erfindung betrifft weiterhin einen Stator für eine entsprechende m-phasige Synchron-Reluktanzmaschine sowie eine entsprechende m-phasige Synchron-Reluktanzmaschine.

Synchron-Reluktanzmaschinen werden aufgrund ihrer hohen Robustheit und aufgrund der hohen Effizienz als kostenneutraler Ersatz für Asynchronmotoren eingesetzt. Für den Einsatz als drehzahlvariabler Antrieb mittels zusätzlich installiertem Frequenzumrichter ist die Reluktanzmaschine der Asynchronmaschine technologisch sogar überlegen. Gegenüber der Permanentmagnet-Synchronmaschine wiederum ist die Reluktanzmaschine aufgrund der fehlenden Magnete mit einem Kostenvorteil ausgestattet, verfügt aber über einen Nachteil in der Drehmomentdichte.

Herkömmliche und heute verwendete Synchron-Reluktanzmotoren basieren konstruktiv auf einer Auslegung mit einer verteilten Statorwicklung, wie sie bereits aus Asynchronmotoren bekannt ist. Verteilte Wicklungen erzeugen eine sinusförmige magnetomotorische Kraft (MMK) mit sehr geringen harmonischen Störkomponenten. Dadurch wird der Streufluss auf ein Minimum reduziert und die Maschine lässt sich hoch ausnutzen. Die Gegenspannung ist entsprechend gering, sodass zusätzlich ein hoher Leistungsfaktor erreicht werden kann.

Im Gegensatz zu verteilten Wicklungen können die hier bevorzugt zu verwendenden konzentrierte Wicklungen (auch Zahnspulen genannt) in Produktionsanlagen sehr leicht und günstig hergestellt werden. Die Wicklungen lassen sich zum Beispiel extern komplett einbaufertig herstellen, sie lassen sich in der Herstellung leicht automatisieren, der Einbau ist entgegen der verteilten Wicklung ebenfalls leicht mechanisierbar. Die Wertschöpfung kann in Teilschritte aufgeteilt und sequentiell bearbeitet werden, wohingegen bei verteilten Wicklungen nach wie vor eine zentral an der Maschine auszuführende oft nicht mechanisierbare, händische Fertigung des Wicklungssystems zwingend notwendig ist. Dadurch ist - bedingt durch den Einzug der Elektromobilität in die bisher rein nach industriellen Aspekten fokussierte Branche der Elektromotoren - ein starker Trend in Richtung konzentrierte Wicklungen am Markt vorhanden.

Statorwicklungssysteme mit konzentrierten Wicklungen (Zahnspulen) arbeiten im Gegensatz zu den verteilten Wicklungen mit einer höheren raumharmonischen Komponente, so dass es im Vergleich zu verteilten Wicklungen im verschalteten Wicklungssystem der Maschine zu zusätzlichen harmonischen Störkomponenten kommt. Aus diesem Grund sind diese Wicklungsarten für Synchron-Reluktanzmotoren bisher Prinzip bedingt zwar anwendbar aber nachteilig. Zudem erreichen konzentrierte Wicklungen nur geringe Drehmomentdichten, da nicht alle Rotorpole gleichmäßig ausgenutzt werden. Weiterhin kommt es aufgrund der Überlagerungen oftmals zu erheblichen Drehmomentwelligkeiten. Auch diese beiden Effekte resultieren aus den harmonischen Störkomponenten. Die Drehmomentdichte fällt dadurch entweder sehr gering aus oder der Leistungsfaktor ist im Vergleich niedrig.

Der wissenschaftliche Artikel »Lehner, B. und Gerling, D.: "Design Considerations for Concentrated Winding Synchronous Reluctance Machines"; IEEE Transportation Electrification Conference and Expo (2016)« beschreibt das Design konzentrierter Wicklungen für eine Synchron-Reluktanzmaschine mit ebensolchen konzentrierten Wicklungen. Die Maschine erreicht einen annehmbar hohen Leistungsfaktor. Die Drehmomentdichte ist vergleichbar mit am Markt verfügbaren Asynchronmotoren.

Der Artikel »Spargo, C. M. et al.: "Application of Fractional-Slot Concentrated Windings to Synchronous Reluctance Motors"; IEEE Transactions on Industy Applications, Bd. 51, Nr. 2, 1. März 2015, Seiten 1446-1455« beschreibt ein Verfahren zur Auslegung eines Statorsegments für einen Stator, das die folgenden Elemente aufweist: einen Stator einer m-phasigen Synchron-Reluktanzmaschine mit konzentrierten Wicklungen, wobei der Stator in ein Statorsegment oder in mehrere Statorsegmente aufteilbar ist und einen ferromagnetischen Grundkörper mit umfänglich verteilten Zahnstrukturen und ein im Grundkörper einliegendes Wicklungssystem umfasst, welches pro Statorsegment z Zahnstrukturen sowie eine der Phasenanzahl m entsprechende Anzahl von Wicklungssträngen U, V, W aufweist, von denen jeder seinerseits eine Serien- und/oder Parallelschaltung mehrererder konzentrierten Wicklungen (20) umfasst, wobei ein Rotor der Synchron-Reluktanzmaschine in einem dem Statorsegment entsprechenden Umfangsabschnitt eine Polzahl p aufweist. Dabei erfolgt eine Wahl einer Statorzahnzahl z der Zahnstrukturen im Segment in Abhängigkeitvon der Phasenanzahl m der Phasen U, V, W und der Polzahl p. Der Artikel beschreibt weiterhin einen entsprechenden Stator.

Es ist Aufgabe der Erfindung ein Verfahren zur Auslegung eines Statorsegments für einen Stator einer Synchron-Reluktanzmaschine, einen entsprechend in ein Statorsegment oder in mehrere Statorsegmente aufteilbaren Stator und eine entsprechende Synchron-Reluktanzmaschine anzugeben, bei denen die Synchron-Reluktanzmaschine eine hohe Drehmomentdichte und eine hohe Effizienz aufweist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Verfahren zur Auslegung eines Statorsegments für einen Stator einer m-phasigen Synchron-Reluktanzmaschine mit konzentrierten Wicklungen, wobei der Stator in ein einziges Statorsegment oder in mehrere Statorsegmente aufteilbar ist und einen ferromagnetischen Grundkörper mit umfänglich verteilten Zahnstrukturen und ein im Grundkörper einliegendes Wicklungssystem umfasst, welches pro Statorsegment z Zahnstrukturen sowie eine der Phasenanzahl m entsprechende Anzahl von Wicklungssträngen aufweist, von denen jeder seinerseits eine Serien- und/oder Parallelschaltung mehrerer der konzentrierten Wicklungen umfasst, wobei ein Rotor der Synchron-Reluktanzmaschine in einem dem Statorsegment entsprechenden Umfangsabschnitt eine Polzahl p aufweist, ist vorgesehen, dass das Verfahren die folgenden Schritte aufweist:

(i) Wahl einer Statorzahnzahl z der Zahnstrukturen im Segment in Abhängigkeit von der Phasenanzahl m der Phasen und der Polzahl p;

(ii) Ermittlung des Wicklungsfaktors $F_W$ sowie eines Drehmomentfaktors $F_T$ mit

$$F_T = 1 - \int_0^{2\pi/K} \left( \frac{[MMK(\theta) - H_P(\theta)]}{MMK(\theta)} \right)^2 d\theta$$

für eine Vielzahl von Ausgestaltungs- und Anordnungsmöglichkeiten der Wicklungsstränge, die sich für die gegebenen Größen Polzahl p und Phasenanzahl m bei Nutzung konzentrierter Wicklungen bezüglich der Statorzahnzahl z ergeben, wobei θ der Winkel in Statorumlaufrichtung, MMK (MMK: magnetomotorische Kraft) ein Maß für die räumliche Verteilung des Strombelags, $H_P$ die harmonische Amplitude jeweils über dem Winkel θ, sowie K ein den Anteil des Statorsegments am Gesamtumfang des Stators angebender Teilungsfaktor ist; und

(iii) Ermittlung von zumindest einer Ausgestaltung des Statorsegments, bei der das Formelprodukt aus Wicklungsfaktor und Drehmomentfaktor $P_T \cdot F_W$ ein lokales Maximum aufweist. Anschließend erfolgt eine Wahl dieser ermittelten Ausgestaltung beziehungsweise eine Auswahl einer dieser ermittelten Ausgestaltungen.

Das mittels dieses Verfahrens ausgelegte und vorgestellte Wicklungssystem lässt sich auf unterschiedliche Stator- und Polkonfigurationen anwenden und erreicht eine sehr hohe Drehmomentdichte bei gleichzeitig gutem Wirkungsgrad und Leistungsfaktor und unter Beibehaltung von allen fertigungstechnischen Vorteilen von nach wie vor einzeln in den Stator eingebundenen Wicklungen (Zahnspulen). Zusätzlich kann durch die Ausführung als konzentrierte Wicklung eine hochgradige Teilbarkeit des Stators erreicht werden, die zusätzliche fertigungstechnische und applikationsspezifische Vorteile ermöglicht ohne einschränkend auf die Leistungsdaten der Basismaschine zu wirken. Die Entwicklung der Maschine erfolgt mittels dieser Bewertungsmethode, die verfahrensbedingt zielführend die laufende Beeinflussung der Harmonischen zur Drehmomentbildung aufzeigt.

Insbesondere ist vorgesehen, dass die Vielzahl der Ausgestaltungs- und Anordnungsmöglichkeiten der Wicklungsstränge, für die die Wicklungs- und Drehmomentfaktoren $F_W$, $F_T$ ermittelt werden, über eine Variation der Anzahl der Wicklungen und/oder der Verteilung dieser Wicklungen über die Zahnstrukturen des Statorsegments abgedeckt wird.

Mit Vorteil ist/sind pro Zahnstruktur entweder eine einzelne Wicklung oder mehrere Wicklungen vorgesehen. Sind mehrere Wicklungen pro Zahnstruktur vorgesehen, so sind diese bevorzugt auf unterschiedlichen Ebenen bezüglich der Höhe der Zahnstruktur angeordnet.

Gemäß einer vorteilhaften Ausführungsform der Erfindung ist vorgesehen, dass zum systematischen durchgehen der Ausgestaltungs- und Anordnungsmöglichkeiten der Wicklungsstränge

(a) die Zahnstrukturen bezüglich ihrer Zahnhöhe in mehrere Ebenen unterteilt werden,

(b) jeder Zahnstruktur auf jeder der Ebenen eine zahnspezifische Wicklung zugeordnet wird, sodass sich auf jeder Ebene die gleiche Abfolge von Wicklungen ergibt,

(c) die Wicklungen zu den Wicklungssträngen verschaltet werden, und

(d) die Positionen der Wicklungen durch ein ebenenweises Verschieben der Abfolge bezüglich der Zahnstrukturen durchpermutiert werden.

Eine Zahnstruktur ist insgesamt mit N Windungen ausgestattet, die sich auf n Wicklungen (mit n = 1, 2, 3, ...) aufteilen, wobei zur Teilung der Windungszahlen der z.B. beiden Wicklungen (n = 2) pro Zahnstruktur N1 = N2 ist und sein kann, oder N1 ungleich N2 ist und sein kann. Fertigungsbedingt können dann bei identischer Windungszahl oder auch unterschiedlicher Windungszahl ebenso unterschiedliche Windungsaufbauten sinnvoll werden, damit eine Montage bei optimierten Füllgrad erreicht werden kann. Es können also konische oder parallele Windungen im Wechsel auf der Maschine verbaut sein, ohne den formelmäßigen Zusammenhang zu unterbrechen.

Gemäß einer weiteren vorteilhaften Ausführungsform der Erfindung ist vorgesehen, dass die Auswahl der zumindest einen Ausgestaltung in Abhängigkeit der Größe des Drehmomentfaktors $F_T$ erfolgt, insbesondere nur für einen Drehmomentfaktor $F_T \geq 0.5$ erfolgt. Geringere Drehmomentfaktoren sind auch durch andere Verfahren erreichbar.

Gemäß noch einer weiteren vorteilhaften Ausführungsform der Erfindung ist vorgesehen, dass die Auswahl der zumindest einen Ausgestaltung nur für eine Statorzahnzahl z der Zahnstrukturen pro Statorsegment erfolgt, die kleiner als das Produkt aus Phasenanzahl m und Polzahl p ($z < m \cdot p$) ist.

Gemäß einer weiteren vorteilhaften Ausführungsform der Erfindung ist vorgesehen, dass der Wicklungsfaktor $F_W$ aus vorhandenen Datensätzen, insbesondere aus als Literaturwerten vorliegenden Datensätzen, ermittelt wird. Im einfachsten Fall ist dies ein "Ablesen von Tabellenwerten". Alternativ wird der Wicklungsfaktor $F_W$ individuell berechnet. Insbesondere für von der Literatur abweichenden Konfigurationen muss der Wicklungsfaktor $F_W$ individuell berechnet werden.

Gemäß einer weiteren vorteilhaften Ausführungsform der Erfindung weist das Verfahren den weiteren Schritt einer geometrische Vorauslegung eines Bohrungsvolumens anhand gewünschter Leistungsdaten und/oder einer vorgegebenen mittleren Drehschubdichte auf.

Schließlich ist mit Vorteil vorgesehen, dass das Verfahren den weiteren Schritt einer Feinauslegung zumindest einer der Größen

- Flussquerschnitte,
- Strombelegung und
- Magnetmenge/Reluktanzteil-Verhältnis

mittels der DOE-Methode oder anderer bekannter Methoden aufweist.

Bei dem erfindungsgemäßen Stator für eine m-phasige Synchron-Reluktanzmaschine mit konzentrierten Wicklungen, der in ein Statorsegment oder in mehrere Statorsegmente aufteilbar ist und einen ferromagnetischen Grundkörper mit umfänglich verteilten Zahnstrukturen und ein im Grundkörper einliegendes Wicklungssystem umfasst, welches pro Statorsegment z Zahnstrukturen sowie eine der Phasenanzahl m entsprechende Anzahl von Wicklungssträngen aufweist, von denen jede ihrerseits eine Serien- und/oder Parallelschaltung mehrerer der konzentrierten Wicklungen umfasst, wobei ein Rotor der Synchron-Reluktanzmaschine in einem dem Statorsegment entsprechenden Umfangsabschnitt eine Polzahl p aufweist, ist vorgesehen, dass die Phasenanzahl m = 3, die Polzahl p = 10 und die Statorzahnzahl 15 oder 18 oder 21 ist. Eine derartige Auslegung des Stators beruht insbesondere auf dem Ergebnis des vorstehend genannten Verfahrens.

Gemäß des erfindungsgemäßen Stators ist weiterhin vorgesehen, dass die Zahnstrukturen bezüglich ihrer Zahnhöhe in mehrere Ebenen unterteilt sind, wobei sich auf jeder der Ebenen in Umfangsrichtung die gleiche Abfolge von Wicklungen ergibt und die Abfolge einer der Ebenen gegenüber der Abfolge zumindest einer anderen der der Ebenen um mindestens eine Zahnstruktur versetzt angeordnet ist. Bevorzugt sind zwei Ebenen vorgesehen, wobei sich besonders bevorzugt die Abfolge der einen Ebene gegenüber der Abfolge zumindest der anderen Ebene um sieben Zahnstrukturen versetzt angeordnet ist.

Gemäß einer Form des erfindungsgemäßen Stators ist vorgesehen, dass für die Phasenanzahl m = 3, die Polzahl p = 10 und die Statorzahnzahl 18 jeder der drei Wicklungsstränge U, V, W eine Serienschaltung von zwölf konzentrierten Wicklungen aufweist, die bezüglich einer strangspezifischen ersten Zahnstrukturposition das folgende Wicklungsschema aufweist: erste und zweite Wicklung auf besagter ersten Position, dritte Wicklung auf der dritten Position, vierte Wicklung auf der sechsten Position, fünfte und sechste Wicklung auf der achten Position, siebte und achte Wicklung auf der zehnten Position, neunte Wicklung auf der zwölften Position, zehnte Wicklung auf der fünfzehnten Position und elfte und zwölfte Wicklung auf der siebzehnten Position. Ist der Stator in mehrere Segmente aufgeteilt, so ergibt sich dieses Schema segmentübergreifend in einer umlaufenden Richtung.

Alternativ oder zusätzlich zur zuvor genannten Form des erfindungsgemäßen Stators ist vorgesehen, dass für jeden der drei Wicklungsstränge U, V, W

- die erste Wicklung, die zweite Wicklung, die fünfte Wicklung, die sechste Wicklung, die neunte Wicklung und die zehnte Wicklung in einer Orientierung um die jeweilige Zahnstruktur und
- die dritte Wicklung, die vierte Wicklung, die siebte Wicklung, die achte Wicklung, die elfte Wicklung und die zwölfte Wicklung in entgegengesetzter Orientierung um die jeweilige Zahnstruktur gewickelt ist.

Bei der erfindungsgemäßen Synchron-Reluktanzmaschine mit konzentrierten Wicklungen, die einen Stator und einen Rotor aufweist, ist erfindungsgemäß vorgesehen, dass der Stator als vorstehend genannter Stator ausgebildet ist.

Nachfolgend wird die Erfindung unter Bezugnahme auf die anliegende Zeichnung anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können. Es zeigt:

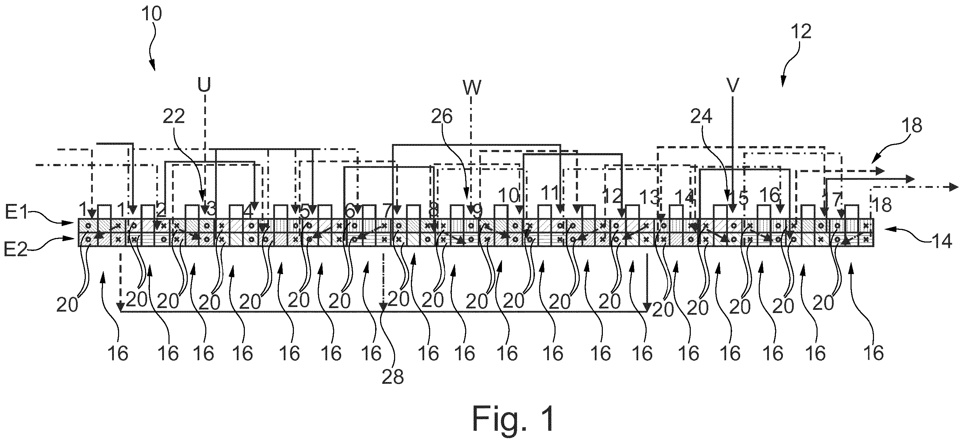

Fig. 1 eine schematische Darstellung eines Statorsegments eines Stators gemäß einer bevorzugten Ausführungsform der Erfindung.

Beispielhaft und in nicht einschränkender Weise zu verstehen ist hier ein Statorsegment 10 eines Stators 12 für eine (m=3)-phasige Synchron-Reluktanzmaschine mit konzentrierten Wicklungen und einem (nicht gezeigten) Rotor, wobei im gezeigten Beispiel das 360° Statorsegment 10 mit dem Stator 12 gleichzusetzen ist. Das Statorsegment 10 weist einen ferromagnetischen Grundkörper 14 mit achtzehn umfänglich verteilten Zahnstrukturen 16 und ein in den Zahnstrukturen 16 des Grundkörpers 14 einliegendes Wicklungssystem 18 auf. Dabei weist das Statorsegment z = 18 Zahnstrukturen sowie eine der Phasenanzahl m = 3 entsprechende Anzahl von 3 Wicklungssträngen U, V, W auf, von denen jeder seinerseits eine Serienschaltung und/oder Parallelschaltung mehrerer der konzentrierten Wicklungen 20 umfasst. Der Stator 12 ist dabei für eine Synchron-Reluktanzmaschine vorgesehen, deren Rotor in einem dem Statorsegment entsprechenden Umfangsabschnitt eine Polzahl p = 10 aufweist (nicht gezeigt).

Es ergibt sich ein entsprechendes "18-10-Wicklungsschema", bei dem die drei Wicklungsstränge U, V, W um je sechs Zahnstrukturen 16 gegeneinander versetzt angeordnet sind. Jeder der drei Wicklungsstränge U, V, W weist eine Serienschaltung von zwölf konzentrierten Wicklungen 20 auf, die bezüglich einer strangspezifischen ersten Zahnstrukturposition 22, 24, 26 das folgende Wicklungsschema aufweist: erste und zweite Wicklung auf besagter ersten Position, dritte Wicklung auf der dritten Position, vierte Wicklung auf der sechsten Position, fünfte und sechste Wicklung auf der achten Position, siebte und achte Wicklung auf der zehnten Position, neunte Wicklung auf der zwölften Position, zehnte Wicklung auf der fünfzehnten Position und elfte und zwölfte Wicklung auf der siebzehnten Position. Dabei ist für jeden der drei Wicklungsstränge U, V, W:

die erste Wicklung, die zweite Wicklung, die fünfte Wicklung, die sechste Wicklung, die neunte Wicklung und die zehnte Wicklung in einer ersten Orientierung um die jeweilige Zahnstruktur und

die dritte Wicklung, die vierte Wicklung, die siebte Wicklung, die achte Wicklung, die elfte Wicklung und die zwölfte Wicklung in entgegengesetzter zweiter Orientierung um die jeweilige Zahnstruktur gewickelt.

Ist der Stator in mehrere Segmente aufgeteilt, so ergibt sich dieses Schema segmentübergreifend in einer umlaufenden Richtung, die in Fig. 1 durch die Richtung der Pfeile angegeben ist.

An der strangspezifischen siebzehnten (Zahnstruktur-)Position wird der jeweilige Wicklungsstrang U, V, W aus dem ferromagnetischen Grundkörper herausgeführt. Hier im Beispiel werden die herausgeführten Enden der Wicklungsstränge U, V, W zu einem Sternpunkt 28 verbunden.

Die 3-phasige Synchron-Reluktanzmaschine ist somit durch die folgenden Größen charakterisiert: achtzehn Zahnstrukturen, zehn Pole (= fünf Polpaare), Wicklungssystem als 4 lagige Wicklung mit einem Versatz (einer Verschiebung) um 7 Zähne (pro Phase). Die Fig. 1 zeigt das entsprechende 18-10 Wicklungsschema.

Hier kann nun ein Drehmomentfaktor von 0,75 erreicht werden. Zusammen mit dem Wicklungsfaktor von 0,735 erreicht die Maschine einen Gesamtfaktor von:

$$F = F_T \cdot F_W = 0.735 \cdot 0.75 = 0.55$$

Die beispielhafte Maschine mit 18 Zähnen und 10 Polen kann ebenfalls in Serie verschaltet als 3-lagige Maschine betrieben werden ohne den Wirkbereich der optimierten Auslegung zu verlassen.

Weitere Details sowie Vorteile der Erfindung werden im Folgenden mit anderen Worten beschrieben.

Beim Aufbau wird der Stator mit konzentrierten, nicht überlappenden Wicklungen (Zahnspulen) bewickelt. Die Wicklung kann hierzu mehrlagig ausgeführt werden. Die Wicklung kann für runde, geschlossene Maschinen wie auch für Maschinensegmente, sowie Linearmotoren verwendet werden. Zur Erzeugung einer magnetomotorischen Kraft MMK mit reduzierten raumharmonischen Komponenten, welche zu hoher Drehmomentdichte und einem guten Leistungsfaktor führt, sind im Gegensatz zum Stand der Technik zwei Faktoren in der Maschinenvorauslegung anzuwenden, wobei der erste alleine betrachtet grundsätzlich bekannt ist und erst durch den zweiten Folgeschritt eine sinnvolle Motorauslegung für Zahnspulen zulässt.

1.) Vorauslegung nach Wicklungsfaktor Fw: in der Literatur bekannt und für jegliche Statorzahn-/Rotorpolkombination in Tabellen abzulesen und/oder zu berechnen

2.) Vorauslegung nach Drehmomentfaktor $F_T$: dieser neu definierte Faktor lässt die Berechnung der magnetischen Ausnutzung eines Rotorpols zu.

In der Literatur ist, wie zuvor detailliert dargelegt, allgemein bekannt, dass sich Synchron-Reluktanzmaschinen mit konzentrierten Wicklungen nicht oder nur sehr schlecht realisieren lassen. Dies liegt hauptsächlich am schlechten Drehmomentfaktor $F_T$ für herkömmliche konzentrierte Wicklungen. Der Faktor gilt für Motoren mit Permanentmagneten, Synchron-Reluktanzmaschinen wie auch beliebige Kombinationen aus Permanentmagnet und Reluktanzmotoren. Die Berechnung des Faktors gilt unverändert für Permanentmagnet-Synchronmaschinen und Synchron-Reluktanzmaschinen. Der Faktor berechnet sich aus der Arbeitsharmonischen MMK-Welle der Maschine, wodurch die Polzahl definiert ist, und der gesamtresultierenden MMK aus allen auftretenden harmonischen Komponenten.

Der zur gezielten Auslegung zusätzlich notwendige neu verwendete Drehmomentfaktor kann wie folgt methodisch definiert werden:

$$F_T = 1 - \int_0^{2\pi/K} \left( \frac{[MMK(\theta) - H_P(\theta)]}{MMK(\theta)} \right)^2 d\theta$$

Dabei entspricht die MMK der Elektromagnetischen Feldverteilung über den räumlichen Winkel. $H_P$ ist die Harmonische Amplitude der Arbeitswelle, wodurch die Polzahl des Motors definiert wird. Der Faktor wird über das Integral eines Statorumlauf des Winkels berechnet. Das Integral wird von 0° bis 360°/K bestimmt. K entspricht einem Teilungsfaktor, der den Winkelabschnitt welcher durch die Polzahl des Statorsegments abgedeckt wird, beschreibt. Für eine voll bestückte Runde Maschine entspricht damit K=1.

Bei konzentrierten Wicklungen liegt der Faktor gewöhnlich bei einem Wert <0,4-0,7.

Wird nun eine herkömmliche konzentrierte Wicklung mit einer oder zwei Ebenen in mehrere Wickelsysteme geteilt und in 2 bis i Ebenen von 2-x Wicklungssystemen mit je einem System um x Zahnstrukturen (für X={1,...Statorzahnzahl}) verschoben angeordnet, ergibt sich bei erfindungsgemäßer Verwendung der Bewertungsmethode und spezifisch ausgeführter Anordnung eine Gesamt-MMK mit geringen harmonischen Komponenten und einem guten Drehmomentfaktor $F_T$. Die Erfinder konnten in überraschender Art und Weise an den derart ausgelegten Maschinen feststellen, dass die Gesamtausnutzung einer Maschine aus dem Produkt des Wicklungsfaktors $F_W$ und dem Drehmomentfaktor $F_T$ gegeben ist.

Mittels der erfindungsgemäßen Auslegungsmethode unter Verwendung dieser neuen Erkenntnis ist es in einfacher Art und Weise möglich erheblich zielführender und ohne iterative Rückschritte in der Auslegung Maschinen mit hoher Leistungsdichte, guten Leistungsfaktor und geringer Drehmomentwelligkeit zu entwerfen.

Im Folgenden wird nun das erfindungsgemäße Vorgehen anhand von beispielhaften Maschinenauslegungen näher beschrieben, dabei ist es für den Fachmann in naheliegender Weise zumutbar die Methode zu weiteren Maschinenauslegungen in anderer Reihenfolge oder Festlegung zu verwenden, wie sie hier nicht beispielhaft dargestellt werden kann, aber ebenso sinngemäß innerhalb der Methode liegen.

Erfindungsgemäßes methodisches Vorgehen:

1.) Definition einer ersten Statorzahnzahl abhängig von der gewünschten Phasenanzahl oder einer Läuferpolpaarzahl abhängig von der Polweite, dem Durchmesser und einer gewünschten Drehfrequenz (Drehzahl) der Maschine. Hier ist nach wie vor eine Auslegung im Bereich von 50 Hz, 60 Hz, wie für Industriemaschinen üblich, oder auch bis zu 1000 Hz denkbar;

2.) Optimierung des Formelproduktes bis ein lokales Maximum über alle Variablen ermittelt wird. Hier können die Stator- und Läuferpolzahl noch einmal beliebig verändert werden, insbesondere auch die erfindungsgemäßen Aufteilung der Spulen mit den Variablen:

a. Versatz um x Zähne,

b. Aufteilung der Windungen N pro Zahnstruktur unter der Optimierung des Wicklungsfaktors;

3.) Berechnung des Faktors gemäß der obigen Angabe ;

4.) Geometrische Vorauslegung eines Bohrungsvolumens anhand der gewünschten Leistungsdaten und der Verwendung einer angesetzten mittleren Drehschubdichte (z.B. 25 kN/m$^2$); und

5.) Feinauslegung mittels bekannter Methoden, z.B. auch unter Zuhilfenahme der Methoden der DOE (Design of Experiment) mit

a. Feinauslegung der Flussquerschnitte;

b. Feinauslegung der Strombelegung, der thermischen Ausnutzung; und c. der Magnetmenge im Verhältnis zum Reluktanzanteil.

Eine Zahnstruktur ist insgesamt mit N Windungen ausgestattet, wobei zur Teilung der Windungszahlen der z.B. beiden Wicklungen pro Zahn N1 = N2 ist und sein kann, oder N1 ungleich N2 ist und sein kann. Fertigungsbedingt können dann bei identischer Windungszahl oder auch unterschiedlicher Windungszahl ebenso unterschiedliche Spulenaufbauten sinnvoll werden, damit eine Montage bei optimierten Füllgrad erreicht werden kann. Es können also konische oder parallele Spulen im Wechsel auf der Maschine verbaut sein, ohne den formelmäßigen Zusammenhang zu unterbrechen.

Erfindungsgemäß werden alle Maschinen mit einem Drehmomentfaktor $F_T > 0.5$ sowie

$$q = \frac{\#Statorz\ddot{a}hne}{\#Phasen \cdot \#Rotorpole} < 1$$

abgedeckt.

Der triviale Fall der reinen Verwendung der Reluktanzkraft ohne Magnetmaterial ergibt eine unveränderte Anwendbarkeit der Methode.

**Patentansprüche**

1. Verfahren zur Auslegung eines Statorsegments für einen Stator (12) einer m-phasigen Synchron-Reluktanzmaschine mit konzentrierten Wicklungen (20), wobei der Stator (12) in ein Statorsegment (10) oder in mehrere Statorsegmente (10) aufteilbar ist und einen ferromagnetischen Grundkörper (14) mit umfänglich verteilten Zahnstrukturen (16) und ein im Grundkörper (14) einliegendes Wicklungssystem (18) umfasst, welches pro Statorsegment z Zahnstrukturen sowie eine der Phasenanzahl m entsprechende Anzahl von Wicklungssträngen (U, V, W) aufweist, von denen jeder seinerseits eine Serien- und/oder Parallelschaltung mehrerer der konzentrierten Wicklungen (20) umfasst, wobei ein Rotor der Synchron-Reluktanzmaschine in einem dem Statorsegment (10) entsprechenden Umfangsabschnitt eine Polzahl p aufweist, **gekennzeichnet durch** die folgenden Schritte:

- Wahl einer Statorzahnzahl z der Zahnstrukturen (16) im Segment (10) in Abhängigkeit von der Phasenanzahl m der Phasen (U, V, W) und der Polzahl p;
- Ermittlung des Wicklungsfaktors Fw sowie eines Drehmomentfaktors $F_T$ mit

$$F_T = 1 - \int_0^{2\pi/K} \left( \frac{[MMK(\theta) - H_P(\theta)]}{MMK(\theta)} \right)^2 d\theta$$

für eine Vielzahl von Ausgestaltungs- und Anordnungsmöglichkeiten der Wicklungsstränge (U, V, W), die sich für die gegebenen Größen Polzahl p und Phasenanzahl m bei Nutzung konzentrierter Wicklungen bezüglich der Statorzahnzahl z ergeben, wobei θ der Winkel in Statorumlaufrichtung, MMK ein Maß für die räumliche Verteilung des Strombelags, $H_P$ die harmonische Amplitude jeweils über dem Winkel θ, sowie K ein den Anteil des Statorsegments am Gesamtumfang des Stators angebender Teilungsfaktor ist; und
- Ermittlung von zumindest einer Ausgestaltung des Statorsegments (10), bei der das Formelprodukt aus Wicklungsfaktor und Drehmomentfaktor $F_T \cdot F_W$ ein lokales Maximum aufweist.

**2.** Verfahren nach Anspruch 1, **dadurch gekennzeichnet, dass** die Vielzahl der Ausgestaltungs- und Anordnungsmöglichkeiten der Wicklungsstränge (U, V, W), für die die Wicklungs- und Drehmomentfaktoren Fw , $F_T$ ermittelt werden, über eine Variation der Anzahl der Wicklungen (20) und/oder der Verteilung dieser Wicklungen (20) über die Zahnstrukturen (16) des Statorsegments (10) abgedeckt wird.

**3.** Verfahren nach Anspruch 1 oder 2, **dadurch gekennzeichnet, dass** pro Zahnstruktur (16) eine einzelne Wicklung (20) oder mehrere Wicklungen (20) vorgesehen sind.

**4.** Verfahren nach einem der Ansprüche 1 bis 3, **dadurch gekennzeichnet, dass** zum systematischen durchgehen der Ausgestaltungs- und Anordnungsmöglichkeiten der Wicklungsstränge (U, V, W)

- die Zahnstrukturen (16) bezüglich ihrer Zahnhöhe in mehrere Ebenen unterteilt werden,
- jeder Zahnstruktur (16) auf jeder der Ebenen (E1, E2) eine zahnspezifische Wicklung (20) zugeordnet wird, sodass sich auf jeder Ebene (E1, E2) die gleiche Abfolge von Wicklungen (20) ergibt,
- die Wicklungen (20) zu den Wicklungssträngen (U, V, W) verschaltet werden, und
- die Positionen der Wicklungen (20) durch ein ebenenweises Verschieben der Abfolge bezüglich der Zahnstrukturen (16) durchpermutiert werden.

**5.** Verfahren nach einem der Ansprüche 1 bis 4, **dadurch gekennzeichnet, dass** eine Auswahl der zumindest einen Ausgestaltung des Statorsegments (10) in Abhängigkeit der Größe des Drehmomentfaktors $F_T$ erfolgt, insbesondere nur für einen Drehmomentfaktor $F_T \geq 0.5$ erfolgt.

**6.** Verfahren nach einem der Ansprüche 1 bis 5, **dadurch gekennzeichnet, dass** die Auswahl der zumindest einen Ausgestaltung nur für eine Statorzahnzahl z der Zahnstrukturen pro Statorsegment erfolgt, die kleiner als das Produkt aus Phasenanzahl m und Polzahl p, also z < m ·p, ist.

**7.** Verfahren nach einem der Ansprüche 1 bis 6, **dadurch gekennzeichnet, dass** der Wicklungsfaktor Fw aus vorhandenen Datensätzen, insbesondere aus als Literaturwerten vorliegenden Datensätzen, ermittelt und/oder individuell berechnet wird.

**8.** Stator (12) für eine m-phasige Synchron-Reluktanzmaschine mit konzentrierten Wicklungen (20), der

- in ein Statorsegment (10) oder in mehrere Statorsegmente (10) aufteilbar ist, welches/welche sich bei einer Auslegung gemäß dem Verfahren nach Anspruch 1 ergibt/ergeben, und
- einen ferromagnetischen Grundkörper (14) mit umfänglich verteilten Zahnstrukturen (16) und ein im Grundkörper (14) einliegendes Wicklungssystem (18) umfasst, welches pro Statorsegment (10) eine einer Statorzahnzahl z entsprechende Anzahl von Zahnstrukturen (16) sowie eine der Phasenanzahl m entsprechende Anzahl von Wicklungssträngen (U, V, W) aufweist, von denen jeder seinerseits eine Serien- und/oder Parallelschaltung mehrerer der konzentrierten Wicklungen (20) umfasst, wobei ein Rotor der Synchron-Reluktanzmaschine in einem dem Statorsegment (10) entsprechenden Umfangsabschnitt eine Polzahl p aufweist, wobei die Phasenanzahl m = 3, die Polzahl p = 10 und die Statorzahnzahl 15 oder 18 oder 21 ist, **dadurch gekennzeichnet, dass** die Zahnstrukturen (16) bezüglich ihrer Zahnhöhe in mehrere Ebenen (E1, E2) unterteilt sind, wobei sich auf jeder Ebene (E1, E2) die gleiche Abfolge von Wicklungen (20) ergibt, wobei die Abfolge einer der Ebenen (E1) gegenüber der Abfolge zumindest einer anderen der der Ebenen (E2) um mindestens eine Zahnstruktur (16) versetzt angeordnet ist, und wobei zumindest eine der im Folgenden aufgelisteten Bedingungen i) und ii) gilt:

i) für die Phasenanzahl m = 3, die Polzahl p = 10 und die Statorzahnzahl 18 jeder der drei Wicklungsstränge (U, V, W) eine Serienschaltung von zwölf konzentrierten Wicklungen (20) aufweist, die bezüglich einer strangspezifischen ersten Zahnstrukturposition das folgende Wicklungsschema aufweist: erste und zweite Wicklung auf besagter ersten Position, dritte Wicklung auf der dritten Position, vierte Wicklung auf der sechsten Position, fünfte und sechste Wicklung auf der achten Position, siebte und achte Wicklung auf der zehnten Position, neunte Wicklung auf der zwölften Position, zehnte Wicklung auf der fünfzehnten Position und elfte und zwölfte Wicklung auf der siebzehnten Position und

ii) für jeden der drei Wicklungsstränge (U, V, W)

- die erste Wicklung, die zweite Wicklung, die fünfte Wicklung, die sechste Wicklung, die neunte Wicklung und die zehnte Wicklung in einer Orientierung um die jeweilige Zahnstruktur und
- die dritte Wicklung, die vierte Wicklung, die siebte Wicklung, die achte Wicklung, die elfte Wicklung und die zwölfte Wicklung in entgegengesetzter Orientierung um die jeweilige Zahnstruktur gewickelt ist.

9. Synchron-Reluktanzmaschine mit konzentrierten Wicklungen, die einen Stator (12) und einen Rotor aufweist, wobei der Stator (12) nach Anspruch 8 ausgestaltet ist.

**Claims**

1. Method for designing a stator segment for a stator (12) of an m-phase synchronous reluctance machine with concentrated windings (20), it being possible for the stator (12) to be divided into a stator segment (10) or into a plurality of stator segments (10), and the stator (12) comprising a ferromagnetic main body (14) with circumferentially distributed tooth structures (16) and a winding system (18) which is inset in the main body (14) and has z tooth structures per stator segment and a number of winding strands (U, V, W) which corresponds to the phase number m and of which each for its part comprises a series and/or parallel circuit of a plurality of the concentrated windings (20), a rotor of the synchronous reluctance machine having a pole number p in a circumferential section which corresponds to the stator segment (10),

**characterized by** the following steps:

- selection of a stator tooth number z of the tooth structures (16) in the segment (10) in a manner which is dependent on the phase number m of the phases (U, V, W) and the pole number p;
- determination of the winding factor Fw and of a torque factor $F_T$ where

$$F_T = 1 - \int_0^{2\pi/K} \left( \frac{[MMK(\theta) - H_P(\theta)]}{MMK(\theta)} \right)^2 d\theta$$

for a multiplicity of design and arrangement possibilities of the winding strands (U, V, W) which result for the given variables of pole number p and phase number m in the case of use of concentrated windings with regard to the stator tooth number z, $\theta$ being the angle in the stator circulation direction, MMK being a measure of the spatial distribution of the current coverage, Hp being the harmonic amplitude in each case over the angle $\theta$, and K being a division factor which specifies the proportion of the stator segment on the overall circumference of the stator; and
- determination of at least one design of the stator segment (10), in the case of which design the formula product of the winding factor and the torque factor $F_T$. $F_W$ has a local maximum.

2. Method according to Claim 1, **characterized in that** the multiplicity of design and arrangement possibilities of the winding strands (U, V, W), for which the winding and torque factors $F_W$, $F_T$ are determined, is covered via a variation of the number of windings (20) and/or the distribution of the said windings (20) over the tooth structures (16) of the stator segment (10).

3. Method according to Claim 1 or 2, **characterized in that** a single winding (20) or a plurality of windings (20) is/are provided per tooth structure (16).

4. Method according to one of Claims 1 to 3, **characterized in that**, in order to systematically go through the design and arrangement possibilities of the winding strands (U, V, W),

- the tooth structures (16) are divided with regard to their tooth height into a plurality of planes,
- each tooth structure (16) on each of the planes (E1, E2) is assigned a tooth-specific winding (20), which results in the same sequence of windings (20) on each plane (E1, E2),
- the windings (20) are interconnected to form the winding strands (U, V, W), and
- the positions of the windings (20) are permuted through a plane-by-plane shift of the sequence with regard to the tooth structures (16).

5. Method according to one of Claims 1 to 4, **characterized in that** a selection of the at least one design of the stator segment (10) takes place in a manner which is dependent on the magnitude of the torque factor $F_T$, in particular takes place only for a torque factor $F_T \geq 0.5$.

6. Method according to one of Claims 1 to 5, **characterized in that** the selection of the at least one design takes place only for a stator tooth number z of the tooth structures per stator segment which is smaller than the product of the phase number m and the pole number p, that is to say z < m · p.

7. Method according to one of Claims 1 to 6, **characterized in that** the winding factor Fw is determined and/or calculated individually from existing data sets, in particular from data sets which exist as values cited in the literature.

8. Stator (12) for an m-phase synchronous reluctance machine with concentrated windings (20), which stator (12)

- can be divided into a stator segment (10) or into a plurality of stator segments (10) which results/result in the case of a design in accordance with the method according to Claim 1, and which stator (12)
- comprises a ferromagnetic main body (14) with circumferentially distributed tooth structures (16) and a winding system (18) which is inset in the main body (14) and has a number of tooth structures (16) which corresponds to a stator tooth number z per stator segment (10), and a number of winding strands (U, V, W) which corresponds to the phase number m and of which each for its part comprises a series and/or parallel circuit of a plurality of the concentrated windings (20), a rotor of the synchronous reluctance machine having a pole number p in a circumferential section which corresponds to the stator segment (10), the phase number being m = 3, the pole number being p = 10, and the stator number being 15 or 18 or 21, **characterized in that** the tooth structures (16) are divided with regard to their tooth height into a plurality of planes (E1, E2), the same sequence of windings (20) resulting on each plane (E1, E2), the sequence of one of the planes (E1) being arranged offset by at least one tooth structure (16) with respect to the sequence of at least one other of the planes (E2), and at least one of the conditions i) and ii) listed below applying:

i) for the phase number m = 3, the pole number p = 10 and the stator tooth number 18, each of the three winding strands (U, V, W) has a series circuit of twelve concentrated windings (20) which has the following winding pattern with regard to a strand-specific first tooth structure position: first and second winding at the said first position, third winding at the third position, fourth winding at the sixth position, fifth and sixth winding at the eighth position, seventh and eighth winding at the tenth position, ninth winding at the twelfth position, tenth winding at the fifteenth position, and eleventh and twelfth winding at the seventeenth position, and

ii) for each of the three winding strands (U, V, W),

- the first winding, the second winding, the fifth winding, the sixth winding, the ninth winding and the tenth winding are wound in one orientation around the respective tooth structure, and
- the third winding, the fourth winding, the seventh winding, the eighth winding, the eleventh winding and the twelfth winding are wound in an opposed orientation around the respective tooth structure.

9. Synchronous reluctance machine with concentrated windings, which has a stator (12) and a rotor, the stator (12) being configured according to Claim 8.

**Revendications**

1. Procédé de conception d'un segment de stator destiné à un stator (12) d'une machine à réluctance synchrone à m phases comprenant des enroulements concentrés (20), le stator (12) pouvant être divisé en un segment de stator (10) ou en plusieurs segments de stator (10) et comprenant un corps de base ferromagnétique (14) pourvu de structures dentées (16) réparties sur la circonférence et un système d'enroulement (18) qui est situé dans le corps de base (14) et qui comporte, par segment de stator, z structures dentées et un nombre de faisceaux d'enroulement (U, V, W) qui correspond au nombre de phases m, chacun d'eux comprenant à son tour un montage en série et/ou en parallèle de plusieurs des enroulements concentrés (20), un rotor de la machine à réluctance synchrone comportant un nombre de pôles p dans une portion circonférentielle correspondant au segment de stator (10),

**caractérisé par** les étapes suivantes :

- sélectionner un nombre de dents de stator z des structures dentées (16) du segment (10) en fonction du nombre de phases m des phases (U, V, W) et du nombre de pôles p ;
- déterminer le facteur d'enroulement $F_W$ et un facteur de couple $F_T$ avec

$$F_T = 1 - \int_0^{2\pi/K} \left( \frac{[MMK(\theta) - H_P(\theta)]}{MMK(\theta)} \right)^2 d\theta$$

pour un grand nombre de possibilités de conception et d'agencement des faisceaux d'enroulement (U, V, W) qui résultent pour les grandeurs données du nombre de pôles p et du nombre de phases m lors de l'utilisation d'enroulements concentrés par rapport au nombre de dents de stator z, $\theta$ étant l'angle dans le sens de rotation du stator, MMK étant une mesure de la distribution spatiale de la densité linéique de courant, Hp étant l'amplitude harmonique à chaque fois sur l'angle $\theta$, et K étant un facteur de division indiquant la proportion du segment de stator sur la circonférence totale du stator ; et
- déterminer au moins une conception du segment de stator (10) dans lequel la formule produit du facteur d'enroulement et du facteur de couple $F_T$ FW présente un maximum local.

2. Procédé selon la revendication 1, **caractérisé en ce que** le grand nombre de possibilités de conception et d'agencement des faisceaux d'enroulement (U, V, W), pour lesquels les facteurs d'enroulement et de couple $F_W$, $F_T$ sont déterminés, est couvert par une variation du nombre des enroulements (20) et/ou de la répartition de ces enroulements (20) sur les structures dentées (16) du segment de stator (10).

3. Procédé selon la revendication 1 ou 2, **caractérisé en ce qu'**un seul enroulement (20) ou plusieurs enroulements (20) sont prévus pour chaque structure dentée (16).

4. Procédé selon l'une des revendications 1 à 3, **caractérisé en ce que**, pour examiner systématiquement les possibilités de conception et d'agencement des faisceaux d'enroulement (U, V, W),

- les structures dentées (16) sont réparties en plusieurs niveaux en ce qui concerne leur hauteur de dent,
- un enroulement (20) spécifique à une dent est associé à chaque structure dentée (16) de chacun des niveaux (E1, E2) de façon à obtenir la même séquence d'enroulements (20) à chaque niveau (E1, E2),
- les enroulements (20) sont interconnectés pour former les faisceaux d'enroulement (U, V, W), et
- les positions des enroulements (20) sont permutées par déplacement dans des plans de la séquence par rapport aux structures dentées (16).

5. Procédé selon l'une des revendications 1 à 4, **caractérisé en ce que** l'au moins une conception du segment de stator (10) est choisie en fonction de la grandeur du facteur de couple $F_T$, notamment uniquement pour un facteur de couple $F_T \geq 0{,}5$.

6. Procédé selon l'une des revendications 1 à 5, **caractérisé en ce que** le choix de l'au moins une conception n'est effectué que pour un nombre de dents de stator z des structures dentées par segment de stator inférieur au produit du nombre de phases m et du nombre de pôles p, c'est-à-dire z <m p.

7. Procédé selon l'une des revendications 1 à 6, **caractérisé en ce que** le facteur d'enroulement Fw est déterminé et/ou est calculé individuellement à partir d'ensembles de données existants, notamment à partir d'ensembles de données disponibles sous forme de valeurs trouvées dans la littérature.

8. Stator (12) destiné à une machine synchrone à réluctance à m phases comprenant des enroulements concentrés (20), lequel stator

- peut être divisé en un segment de stator (10) ou en plusieurs segments de stator (10), lesquels résultent d'une conception selon le procédé de la revendication 1, et
- comprend un corps de base ferromagnétique (14) pourvu de structures dentées (16) réparties circonférentiellement et un système d'enroulements (18) qui est situé dans le corps de base (14) et qui, par segment de stator (10), présente un nombre de structures dentées (16) qui correspond à un nombre de dents de stator z et un nombre de faisceaux d'enroulements (U, V, W) qui correspond au nombre de phases m, chacun d'eux comprenant à son tour un montage en série et/ou en parallèle de plusieurs des enroulements concentrés (20), un rotor de la machine à réluctance synchrone comportant un nombre de pôles p dans une portion circonférentielle correspondant au segment de stator (10), le nombre de phases étant m = 3, le nombre de pôles étant p = 10 et le nombre de dents de stator étant de 15 ou 18 ou 21, **caractérisé en ce que** les structures dentées (16) sont subdivisées en plusieurs niveaux (E1, E2) en ce qui concerne leur hauteur de dent, la même séquence d'enroulements (20) étant réalisée à chaque niveau (E1, E2), la séquence d'un des niveaux (E1) étant disposée de manière décalée d'au moins une structure dentée (16) par rapport à la séquence d'au moins un autre des niveaux (E2), et l'une au moins des conditions i) et ii) énumérées ci-dessous s'appliquant :

i) pour le nombre de phases m = 3, le nombre de pôles p = 10 et le nombre de dents de stator 18 de chacun des trois faisceaux d'enroulement (U, V, W) comportant un montage en série de douze enroulements concentrés (20) qui comporte le schéma d'enroulement suivant par rapport à une première position de structure dentée spécifique au faisceau : un premier et un deuxième enroulement sur ladite première position, un troisième enroulement sur la troisième position, un quatrième enroulement sur la sixième position, un cinquième et un sixième enroulement sur la huitième position, un septième et un huitième enroulement sur la dixième position, un neuvième enroulement sur la douzième position, un dixième enroulement sur la quinzième position et un onzième et un douzième enroulement sur la dix-septième position et
ii) pour chacun des trois faisceaux d'enroulement (U, V, W)

- le premier enroulement, le deuxième enroulement, le cinquième enroulement, le sixième enroulement, le neuvième enroulement et le dixième enroulement étant enroulés dans une orientation autour de la structure dentée respective et
- le troisième enroulement, le quatrième enroulement, le septième enroulement, le huitième enroulement, le onzième enroulement et le douzième enroulement étant enroulés autour de la structure dentée respective dans des directions opposées.

9. Machine à réluctance synchrone pourvue d'enroulements concentrés, laquelle comporte un stator (12) et un rotor, le stator (12) étant conçu selon la revendication 8.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LEHNER, B. ; GERLING, D.** Design Considerations for Concentrated Winding Synchronous Reluctance Machines. *IEEE Transportation Electrification Conference and Expo,* 2016

- **SPARGO, C. M. et al.** Application of Fractional-Slot Concentrated Windings to Synchronous Reluctance Motors. *IEEE Transactions on Industy Applications,* 01. Marz 2015, vol. 51 (2), 1446-1455